# EUROPÄISCHE PATENTSCHRIFT

(11) **EP 1 245 749 B1**
(45) Veröffentlichungstag und Bekanntmachung des Hinweises auf die Patenterteilung: **19.10.2005**
(21) Anmeldenummer: 02003943.4
(22) Anmeldetag: 22.02.2002
(51) Int. Cl.: E04B 1/80, E04B 1/86, B32B 5/26

(54) **Dämmplatte**
Insulating panel
Panneau isolant

(30) Priorität: 28.03.2001 DE 20105464 U
(43) Veröffentlichungstag der Anmeldung: 02.10.2002
(73) Patentinhaber: VÖWA GmbH, 86399 Bobingen (DE)
(72) Erfinder: Vöst, Günther, 86399 Bobingen (DE)
(74) Vertreter: Rapp, Bertram

(56) Entgegenhaltungen:
- EP-A- 0 700 779
- EP-A- 0 992 340
- DE-A- 19 904 423

## Beschreibung

Die Erfindung betrifft eine Dämmplatte nach dem Oberbegriff des Anspruches 1.

Eine ähnliche Dämmplatte ist Gegenstand der EP 0 992 340 A2. Bei dieser Dämmplatte besteht der Kern aus einer Dämmschicht und einer Versteifungsschicht. Die Versteifungsschicht besteht aus textilem Fasermaterial, beispielsweise aus Textilien oder Textilabfällen. Die Platte kann auch aus Fasern aus Zellstoff, Stroh, Flachs, Gewebe, Spanplatten, Sperrholz oder sonstigem faserartigen Material bestehen. Beidseits sind auf den Kern Polyesterfaservliese aufkaschiert.

Eine derartige Dämmplatte ist zum Verlegen in Innenräumen, nicht jedoch zum Verlegen im Freiem geeignet. Die Polyesterfaservliese sind wasserdurchlässig, so daß der Kern feucht wird und sich gegebenenfalls verwirft.

Gegenstand der EP 0 700 779 A2 ist eine diffusionsoffene Baufolien und ein Verfahren zu ihrer Herstellung, welche im allgemeinsten Sinne ebenfalls als Dämmplatte bezeichnet werden kann. Gemäß einer in dieser Schrift beschriebenen Ausführungsform weist diese Baufolie drei Vliesbahnlagen auf. Zwischen einer äußeren Materialbahn und einer inneren Materialbahn befindet sich hierbei eine mittlere Materialbahn, die von zwei Polyurethanfolien eingeschlossen und mit diesen durch Klebepunkte verbunden ist. Die äußeren Materialbahnen sind durch linienförmig aufgebrachte Kleber mit dieser Polyurethanfolie verbunden. Beide Polyurethanfolien sind als wasserdampfdurchlässig, jedoch trotzdem wasserdicht (d. h. wasserundurchlässig) beschrieben.

Eine derartige Dämmplatte weist den Nachteil auf, dass Wasserdampf aus ihrer Mitte in beide Richtungen, also auch in den trocken zu haltenden Untergrund austreten kann.

Es besteht die Aufgabe, die Dämmplatte so auszubilden, daß sie zum Verlegen im Freien geeignet ist.

Gelöst wird diese Aufgabe mit den Merkmalen des Anspruches 1. Vorteilhafte Ausgestaltungen sind den Unteransprüchen entnehmbar.

Die Dämmplatten werden auf einem tragfähigen Untergrund wie beispielsweise Beton oder zementärem Estrich verlegt. Auf die Dämmplatten können Steingut, Steinzeug, Feinsteinzeug sowie Kunst- und Natursteine aufgebracht werden. Die Dämmplatte ist gegen Oberflächenwasser und gegen Aufsteigen der Feuchtigkeit des Untergrunds geschützt. Eventuell im Kern vorhandene Feuchtigkeit kann als Wasserdampf über die wasserdampfdurchlässige Folie austreten.

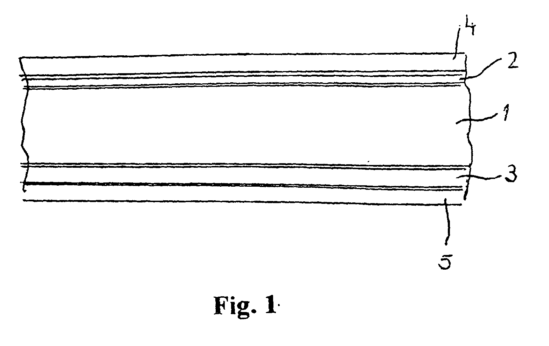

Ein Ausführungsbeispiel wird nachfolgend an Hand der Zeichnung näher erläutert. Sie zeigt einen Schnitt durch die Dämmplatte.

Die Plattendicke liegt zwischen 3mm und 30mm, bevorzugt bei 6mm. Das spezifische Gewicht liegt zwischen 300g/m³ und 1200g/m³, bevorzugt bei 700g/m³

Der Kern 1 besteht aus einem textilen faserartigen Material wie z. B. Polyesterfasern, Polyamidfasern oder Polypropylenfasern. Diese Fasern sind kunststoffgebunden und werden als Platten mittels eines Pressverfahrens hergestellt.

Auf diesem Kern 1 sind zwei Folien 2, 3 aufkaschiert, welche beide wasserundurchlässig sind. Die Folie 2 ist jedoch wasserdampfdurchlässig. Auf die beiden wasserundurchlässigen Folien 2, 3 ist jeweils ein Polyesterfaservlies 4, 5 aufkaschiert.

Bei dem Verbundmaterial zwischen den wasserundurchlässigen Folien 2, 3 und dem Kern 1 sowie zwischen den wasserundurchlässigen Folien 2, 3 und den Polyestervliesen 4, 5 kann es sich um einen Sprühkleber handeln. Dieses Verbundmaterial kann jedoch auch aus einer geschmolzenen Kunststoffolie z. B. aus Polyethylen oder Polyvenylchlorid bestehen. Hierbei ist darauf zu achten, daß die Wasserundurchlässigkeit der Folien 2, 3 und die Wasserdampfdurchlässigkeit der Folie 2 nicht beeinträchtigt wird. Die Verbundmaterialien müssen über den Querschnitt der Dämmplatte nicht die gleichen sein, das heißt bei der gleichen Dämmplatte können sowohl Sprühkleber als auch geschmolzene Kunststoffolie als Verbundmaterial verwendet werden.

Bestehen die wasserundurchlässigen Folien 2, 3 aus Kunststoff, wie beispielsweise aus PE und/oder PVC weisen sie ein Dickenverhältnis von beispielsweise 1 zu 4 auf. Die wasserundurchlässige, jedoch wasserdampfdurchlässige Folie 2 ist beispielsweise 25 µ dick, währen die wasserundurchlässige Folie 3 100 µ dick ist. Es können auch wasserundurchlässige Folien 2, 3 verwendet werden, die eine unterschiedliche Dichte aufweisen, wobei die Dichte der Folie 2 geringer ist als die Dichte der Folie 3.

Die Folien 2, 3 können auch aus Aluminium bestehen, wobei die Folie 2 so behandelt ist, daß sie wasserdampfdurchlässig wird.

Wie im dargestellten Ausführungsbeispiel gezeigt, besteht der Kern 1 nur aus einer Platte textilen Fasermaterials.

## Patentansprüche

1. Dämmplatte mit einem textiles Fasermaterial aufweisenden Kern (1) und mit dem Kern (1) verbundenen Außenseiten aus Faservlies, wobei zwischen dem Kern (1) und jedem Faservlies eine wasserundurchlässige Folie (2, 3) angeordnet ist, **dadurch gekennzeichnet, daß** die Faservliese als Polyesterfaservliese (4, 5) ausgebildet sind, und eine der Folien (2) wasserdampfdurchlässig ist während die andere Folie (3) wasserdampfundurchlässig ist.

2. Dämmplatte nach Anspruch 1, **dadurch gekennzeichnet, daß** die wasserdampfdurchlässige Folie (2) dünner ist als die andere wasserundurchlässige Folie (3).

3. Dämmplatte nach Anspruch 1 oder 2, **dadurch gekennzeichnet, daß** die wasserdampfdurchlässige Folie (2) eine geringere Dichte aufweist als die andere wasserundurchlässige Folie (3).

4. Dämmplatte nach Anspruch 2, **dadurch gekennzeichnet, daß** die wasserundurchlässigen Folien (2, 3) aus Kunststoff bestehen deren Dickenverhältnis etwa 1 zu 4 beträgt.

5. Dämmplatte nach einem der Ansprüche 1 bis 4, **dadurch gekennzeichnet, daß** die beiden wasserundurchlässigen Folien (2, 3) durch Erweichen aufgrund von Erhitzung während des Herstellprozesses innig mit den angrenzenden Oberflächen des Kerns (1) und der Polyesterfaservliese (4, 5) verbunden sind.

6. Dämmplatte nach einem der Ansprüche 1 bis 4, **dadurch gekennzeichnet, daß** das Verbundmaterial zwischen den wasserundurchlässigen Folien (2, 3) und dem Kern (1) aus einem PU-Sprühkleber besteht.

7. Dämmplatte nach einem der Ansprüche 1 bis 4, **dadurch gekennzeichnet, daß** das Verbundmaterial zwischen den wasserundurchlässigen Folien (2, 3) und den Polyestervliesen (4, 5) aus einem PU-Sprühkleber besteht.

8. Dämmplatte nach einem der Ansprüche 1 bis 4, **dadurch gekennzeichnet, daß** das Verbundmaterial zwischen den wasserundurchlässigen Folien (2, 3) und dem Kern (1) aus einer geschmolzenen Kunststoffolie besteht.

9. Dämmplatte nach einem der Ansprüche 1 bis 4, **dadurch gekennzeichnet, daß** das Verbundmaterial zwischen den wasserundurchlässigen Folien (2, 3) und den Polyestervliesen (4, 5) aus einer geschmolzenen Kunststoffolie besteht.

10. Dämmplatte nach einem der Ansprüche 1 bis 3 und 6 bis 8, **dadurch gekennzeichnet, daß** das die wasserundurchlässigen Folien (2, 3) aus Aluminium bestehen.

11. Dämmplatte nach einem der Ansprüche 1 bis 10, **dadurch gekennzeichnet, daß** das Folienmaterial aus Polyvinylchlorid besteht.

12. Dämmplatte nach einem der Ansprüche 1 bis 10, **dadurch gekennzeichnet, daß** das Folienmaterial aus Polyethylen besteht.

13. Dämmplatte nach einem der Ansprüche 1 bis 12, **dadurch gekennzeichnet, daß** die Plattendicke zwischen 3mm und 30mm, bevorzugt bei 6mm liegt.

14. Dämmplatte nach einem der Ansprüche 1 bis 13, **dadurch gekennzeichnet, daß** ihr spezifisches Gewicht zwischen 300g/m³ und 1200g/m³, bevorzugt bei 700g/m³ liegt.

## Claims

1. Insulating panel with a core (1) exhibiting a textile fibre material, and with outsides made of fibre fleece connected to the core (1), wherein a film (2, 3) impermeable to water is arranged between the core (1) and each fibre fleece, **characterised in that** the fibre fleeces take the form of polyester fibre fleeces (4, 5), and one of the films (2) is permeable to water vapour while the other film (3) is impermeable to water vapour.

2. Insulating panel according to claim 1, **characterised in that** the film (2) which is permeable to water vapour is thinner than the other film (3) which is impermeable to water.

3. Insulating panel according to claim 1 or 2, **characterised in that** the film (2) which is permeable to water vapour has a lower density than the other film (3) which is impermeable to water.

4. Insulating panel according to claim 2, **characterised in that** the films (2, 3) which are impermeable to water are made of plastic, the thickness ratio of which is approximately 1 to 4.

5. Insulating panel according to one of claims 1 to 4, **characterised in that** the two films (2, 3) which are impermeable to water are connected intimately to the adjacent surfaces of the core (1) and the polyester fibre fleeces (4, 5) by softening due to heating during the manufacturing process.

6. Insulating panel according to one of claims 1 to 4, **characterised in that** the bonding material between the films (2, 3) which are impermeable to water and the core (1) consists of a PU spray adhesive.

7. Insulating panel according to one of claims 1 to 4, **characterised in that** the bonding material between the films (2, 3) which are impermeable to water and the polyester fleeces (4, 5) consists of a PU spray adhesive.

8. Insulating panel according to one of claims 1 to 4, **characterised in that** the bonding material between the films (2, 3) which are impermeable to water and the core (1) consists of a melted plastic film.

9. Insulating panel according to one of claims 1 to 4, **characterised in that** the bonding material between the films (2, 3) which are impermeable to water and the polyester fleeces (4, 5) consists of a melted plastic film.

10. Insulating panel according to one of claims 1 to 3 and 6 to 8, **characterised in that** the films (2, 3) which are impermeable to water consist of aluminium.

11. Insulating panel according to one of claims 1 to 10, **characterised in** the film material consists of polyvinyl chloride.

12. Insulating panel according to one of claims 1 to 10, **characterised in that** the film material consists of polyethylene.

13. Insulating panel according to one of claims 1 to 12, **characterised in that** the panel thickness is between 3 mm and 30 mm, preferably 6 mm.

14. Insulating panel according to one of claims 1 to 13, **characterised in that** its specific gravity is between 300 g/m³ and 1200 g/m³, preferably 700 g/m³.

## Revendications

1. Panneau isolant doté d'une partie centrale (1) comprenant un matériau textile fibreux et doté de côtés extérieurs en tissu non-tissé reliés à la partie centrale (1), une feuille imperméable à l'eau (2, 3) étant disposée entre la partie centrale (1) et chaque tissu non-tissé, **caractérisé en ce que** les tissus non-tissés sont conçus comme des tissus non-tissés en polyester (4), et une des feuilles (2) est perméable à la vapeur d'eau tandis que l'autre feuille (3) est imperméable à la vapeur d'eau.

2. Panneau isolant selon la revendication 1, **caractérisé en ce que** la feuille perméable à la vapeur d'eau (2) est plus mince que l'autre feuille imperméable à l'eau (3).

3. Panneau isolant selon la revendication 1 ou 2, **caractérisé en ce que** la feuille perméable à la vapeur d'eau (2) comprend une densité inférieure à celle de l'autre feuille imperméable à l'eau (3).

4. Panneau isolant selon la revendication 2, **caractérisé en ce que** les feuilles imperméables à l'eau (2, 3) sont constituées d'une matière plastique dont l'épaisseur relative s'élève approximativement de 1 à 4.

5. Panneau isolant selon l'une quelconque des revendications 1 à 4, **caractérisé en ce que** les deux feuilles imperméables à l'eau (2, 3) sont reliées de façon intime aux surfaces adjacentes de la partie centrale (1) et des tissus non-tissés en polyester (4, 5) par ramollissement dû au chauffage pendant le processus de fabrication.

6. Panneau isolant selon l'une quelconque des revendications 1 à 4, **caractérisé en ce que** le matériau composite entre les feuilles imperméables à l'eau (2, 3) et la partie centrale (1) est constitué d'un adhésif à pulvériser en PU.

7. Panneau isolant selon l'une quelconque des revendications 1 à 4, **caractérisé en ce que** le matériau composite entre les feuilles imperméables à l'eau (2, 3) et les tissus non-tissés en polyester (4, 5) est constitué d'un adhésif à pulvériser en PU.

8. Panneau isolant selon l'une quelconque des revendications 1 à 4, **caractérisé en ce que** le matériau composite entre les feuilles imperméables à l'eau (2, 3) et la partie centrale (1) est constitué d'une feuille de matière plastique fondue.

9. Panneau isolant selon l'une quelconque des revendications 1 à 4, **caractérisé en ce que** le matériau composite entre les feuilles imperméables à l'eau (2, 3) et les tissus non-tissés en polyester (4, 5) est constitué d'une feuille de matière plastique fondue.

10. Panneau isolant selon l'une quelconque des revendications 1 à 3 et 6 à 8, **caractérisé en ce que** les feuilles imperméables à l'eau (2, 3) sont constituées d'aluminium.

11. Panneau isolant selon l'une quelconque des revendications 1 à 10, **caractérisé en ce que** le matériau des feuilles est constitué de chlorure de polyvinyle.

12. Panneau isolant selon l'une quelconque des revendications 1 à 10, **caractérisé en ce que** le matériau des feuilles est constitué de polyéthylène.

13. Panneau isolant selon l'une quelconque des revendications 1 à 12, **caractérisé en ce que** l'épaisseur du panneau mesure entre 3 mm et 30 mm, s'élève de préférence à 6 mm.

14. Panneau isolant selon l'une quelconque des revendications 1 à 13, **caractérisé en ce que** son poids spécifique est compris entre 300 g/m³ et 1200 g/m³, s'élève de préférence à 700 g/m³.
